# EUROPÄISCHE PATENTSCHRIFT

(11) **EP 1 747 959 B1**
(45) Veröffentlichungstag und Bekanntmachung des Hinweises auf die Patenterteilung: **13.08.2014**
(21) Anmeldenummer: 06115381.3
(22) Anmeldetag: 13.06.2006
(51) Int. Cl.: B61D 17/20, B61D 17/22

(54) **Anordnung mit einem Faltenbalg und einem Gelenkportal eines Wagenkastens**
Arrangement with a bellow and a railway car structure
Agencement avec un soufflet d'intercommunication et une structure de véhicule ferroviaire

(30) Priorität: 21.07.2005 DE 102005034231
(43) Veröffentlichungstag der Anmeldung: 31.01.2007
(73) Patentinhaber: Siemens Aktiengesellschaft, 80333 München (DE)
(72) Erfinder: Bernard, Paul, 40223 Düsseldorf (DE); Kleba-Keydel, Hubert, 40670 Meerbusch (DE); Schillings, Dirk, 41472 Neuss (DE)

(56) Entgegenhaltungen:
- DE-A1- 4 209 727
- DE-A1- 4 330 042
- DE-A1- 19 634 219
- DE-A1- 19 638 154
- DE-U1- 20 015 479
- US-A- 2 287 757
- US-A- 2 408 473

## Beschreibung

Die Erfindung betrifft eine Anordnung gemäß dem Oberbegriff des Anspruchs 1.

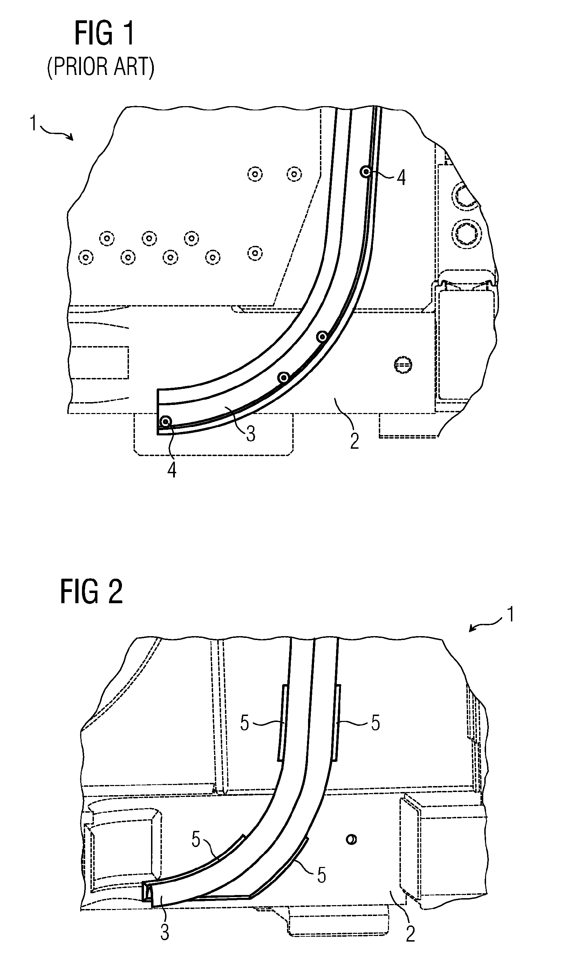

Wie in Fig. 1 gezeigt, ist es bei Schienenfahrzeugen mit gelenkig gekuppelten Wagenkästen allgemein üblich, den jeweiligen Faltenbalg über seinen Rahmen 3 durch Niete 4 mit den entsprechenden Gelenkportalflächen 2 des Wagenkastens 1 zu verbinden. Auftretende Torsionsbelastungen des Gelenkfahrzeugs rufen an den Wagenkästen entsprechende Bewegungen hervor, die sich negativ auf die Nietverbindungen auswirken, insbesondere durch eine Lockerung der Nietverbindungen mit der Folge von Undichtigkeiten im Bereich des Faltenbalgrahmens 3 gegenüber den jeweiligen Gelenkportalflächen 2.

Wagenkästen mit daran befestigten Faltenbalgen sind darüber hinaus beispielsweise in den Druckschriften DE 200 15 479 U1, DE 196 34 219 Al und US 2 408 473 A beschrieben.

Der Erfindung liegt die Aufgabe zugrunde, die Befestigung eines Faltenbalgs auf möglichst einfache und kostengünstige Weise so auszubilden, dass Undichtigkeiten sicher vermieden sind.

Diese Aufgabe wird erfindungsgemäß durch die kennzeichnenden Merkmale des Anspruchs 1 bzw. durch die kennzeichnenden Schritte des Anspruchs 2 gelöst.

Die durch die Erfindung erzielbaren Vorteile bestehen insbesondere darin, dass eine zuverlässige Abdichtung zum Wagenkasten gegeben ist, da alle Torsionsbewegungen des Schienenfahrzeugs von dem angeschweißten Faltenbalgrahmen ohne Schwierigkeiten aufgenommen werden. Dadurch ist außerdem günstig eine effektivere Anbindung des Faltenbalgrahmens im Bereich seiner kleinen Eckbiegeradien ermöglicht. Im übrigen besteht gegenüber den früher üblichen Nietverbindungen ein Kostenvorteil, weil aufwändige Bohrarbeiten und eine gesonderte Abdichtung jedes einzelnen Nietes entfallen.

Ein Ausführungsbeispiel der Erfindung ist in Fig. 2 dargestellt. Hierbei ist der Rahmen 3 des Faltenbalgs durch Schrittschweißung an den Gelenkportalflächen 2 des Wagenkastens 1 angeschlossen. Durch die Schrittschweißung wird nur wenig Wärme in den Rahmen 3 eingebracht, so dass dieser ohne einen Verzug seine Form behält. Die mit dem Bezugszeichen 5 versehenen Schweißnähte sind jeweils als Kehlnaht ausgeführt. Gegenüber der in Fig. 1 gezeigten bisherigen Ausführung ist der Faltenbalgrahmen 3 nunmehr derart gestaltet, dass zum einen ausreichend Querschnitt für das vorgenannte Anschweißen mittels einer Kehlnaht zur Verfügung steht und zum anderen die Zugänglichkeit für das Schweißwerkzeug gewährleistet ist.

Die Dichtigkeit des Rahmens 3 gegenüber den Gelenkportalflächen 2 des Wagenkastens 1 wird mittels Versiegelung durch eine elastische Dichtungsmasse erreicht. Diese Abdichtung ist aufgrund des größeren Querschnitts des Rahmenprofils, der für das Schweißen erforderlich ist, einfacher und sicherer auszuführen. Die Verschweißung verhindert insbesondere, dass die Dichtstellen mechanischen Belastungen und Bewegungen ausgesetzt sind, die im Laufe der Zeit zu Undichtigkeiten führen würden.

## Patentansprüche

1. Anordnung, die aufweist:
- einen Faltenbalg und
- einen Wagenkasten (1) eines Schienenfahrzeugs,
- wobei ein Rahmen (3) des Faltenbalgs mit Gelenkportalflächen (2) des Wagenkastens (1) verbunden ist,
**dadurch gekennzeichnet, dass**
der Rahmen (3) des Faltenbalgs an den Gelenkportalflächen (2) des Wagenkastens (1) durch Schrittschweißung angeschweißt ist,wobei die Schweißnähte (5) zwischen dem Rahmen (3) und den Gelenkportalflächen (2) jeweils als Kehlnaht ausgeführt sind.

2. Verfahren zum Befestigen eines Rahmens eines Faltenbalgs an Gelenkportalflächen (2) eines Wagenkastens (1) eines Schienenfahrzeugs,
**dadurch gekennzeichnet,**
**dass** der Rahmen (3) des Faltenbalgs an den Gelenkportalflächen (2) des Wagenkastens (1) durch Schrittschweißung angeschweißt wird, wobei
die Schweißnähte jeweils als Kehlnähte ausgeführt werden.

3. Verfahren nach Anspruch 2,
**dadurch gekennzeichnet, dass**
eine Abdichtung des Rahmens (3) gegenüber den Gelenkportalflächen (2) des Wagenkastens (1) mittels einer Versiegelung durch eine elastische Dichtmasse durchgeführt wird.

## Claims

1. Arrangement comprising:
- a bellows and
- a car body (1) of a rail vehicle,
- wherein a frame (3) of the bellows is connected to articulated portal surfaces (2) of the car body (1),
**characterized in that**
the frame (3) of the bellows is welded to the articulated portal surfaces (2) of the car body (1) by step-by-step welding, wherein the welds (5) between the frame (3) and the articulated portal surfaces (2) are respectively made in the form of fillet welds.

2. Method for fastening a frame of a bellows to articulated portal surfaces (2) of a car body (1) of a rail vehicle,
**characterized**
**in that** the frame (3) of the bellows is welded to the articulated portal surfaces (2) of the car body (1) by step-by-step welding, wherein
the welds are respectively made in the form of fillet welds.

3. Method according to Claim 2,
**characterized in that**
a sealing of the frame (3) with respect to the articulated portal surfaces (2) of the car body (1) is carried out by means of sealing by an elastic sealing compound.

## Revendications

1. Agencement qui a :
- un soufflet ( 1 ) et
- une caisse ( 1 ) de voiture d'un véhicule ferroviaire,
- dans lequel un cadre ( 3 ) du soufflet est relié à des surfaces ( 2 ) de portique d'articulation de la caisse ( 1 ) de voiture,
**caractérisé en ce que**
le cadre ( 3 ) du soufflet est soudé aux surfaces ( 2 ) de portique d'articulation de la caisse ( 1 ) de voiture par soudage de proche en proche, les cordons ( 5 ) de soudure entre le cadre ( 3 ) et les surfaces ( 2 ) de portique d'articulation étant réalisés respectivement sous la forme de soudure d'angle.

2. Procédé de fixation d'un cadre d'un soufflet à des surfaces ( 2 ) de portique d'articulation d'une caisse ( 1 ) de voiture d'un véhicule ferroviaire,
**caractérisé**
**en ce que** l'on soude, par soudage de proche en proche, le cadre ( 3 ) du soufflet aux surfaces ( 2 ) de portique d'articulation de la caisse ( 1 ) de voiture, dans lequel on réalise des cordons de soudure respectivement sous la forme de soudures d'angle.

3. Procédé suivant la revendication 2, **caractérisé**
**en ce que** l'on rend étanche le cadre ( 3 ) par rapport aux surfaces ( 2 ) de portique d'articulation de la caisse ( 1 ) de voiture au moyen d'un scellement par une composition d'étanchéité élastique.
